# EUROPEAN PATENT APPLICATION

(11) **EP 3 171 279 A1**
(43) Date of publication of application: **24.05.2017**
(21) Application number: 16194451.7
(22) Date of filing: 18.10.2016
(51) Int. Cl.: G06F 17/27, G06F 17/22, G06F 3/01

(54) **METHOD AND DEVICE FOR INPUT PROCESSING**

(30) Priority: 23.11.2015 CN 201510819054
(71) Applicant: Xiaomi Inc., Beijing 100085 (CN)
(72) Inventor: GAO, Yi, Haidian District, Beijing 100085 (CN); WANG, Hongqiang, Haidian District, Beijing 100085 (CN); GE, Yunyuan, Haidian District, Beijing 100085 (CN)
(74) Representative: Robson, Aidan John

(57) **Abstract**

The present disclosure refers to method, apparatus and device for input processing. The method comprises: obtaining (101) input contents; obtaining (102) context contents; matching (103) the input content and the context content; and displaying (104) the associated contents as candidate input words in case that any content in the context contents is found to be the associated with the input contents. By applying technical solutions of embodiments of the present disclosure, contents that a user wants to enter may be provided to the user in a quick manner in combination with the context. It saves input time for a user, and improves user experience.

## Description

### FIELD

The present disclosure relates to the field of mobile communication technology, and more particularly to method, apparatus and device for input processing.

### BACKGROUND

Currently there are a wide variety of smart input methods. Quickness of smart input methods provides a user with convenient typing experience. However, in some cases, corresponding input methods are not accurate enough. For example, when using a micro-blog, if a user wants to reply to a topic containing a noun "brother Han", and the user just needs to enter this noun which has never used by he or she before, in such case the input method does not provide "brother Han" as a candidate word for the user although the user spelled the Pinyin input "hange".

### SUMMARY

The present disclosure provides method, apparatus and device for input processing, in order to solve the problem in the relevant art that candidate words cannot be provided in combination with the context.

According to a first aspect of the disclosed embodiments, a method for input processing is provided, the method comprising: obtaining input contents; obtaining context contents; matching the input content and the context content; and displaying the associated contents as candidate input words in case that any content in the context contents is found to be the associated with the input contents.

Optionally, the method further comprises: adding the associated content to a vocabulary bank of the input method program.

Optionally, obtaining the input content comprises: obtaining content entered by the input method program.

Optionally, obtaining the context content comprises: obtaining context contents of the current interface, the current interface and the preset neighboring interfaces, or all interfaces.

Optionally, matching the input content and the context content comprises: matching the converted context content with the input content after contents in the context content are converted to be represented by the input rule corresponding to the input context. If any content in the context contents after converted to be represented by the input rule corresponding to the input contents is identical or similar to the input contents, determining that the content is found to be associated with the input contents.

Optionally, when the context content comprises an image content, matching the input content and the context content further comprises: employing an image recognition technology to recognize texts contained in the image as a part of the context contents; matching the converted context content with the input content after contents in the context content are converted to be represented by the input rule corresponding to the input context.

Optionally, matching the converted context content with the input content after the conversion comprising: when the input rule corresponding to the input contents is Pinyin input rule, matching the input contents with contents in the context contents, after the contents in the context contents have been converted to be represented by Pinyin input; when the input rule corresponding to the input contents is Wubi input rule, matching the input contents with contents in the context contents, after the contents in the context contents have been converted to be represented by Wubi input; or when the input rule corresponding to the input contents is Stroke count input rule, matching the input contents with contents in the context contents, after the contents in the context contents have been converted to be represented by Stroke count input.

Optionally, obtaining the input content comprises: obtaining, by the application, the input content transmitted by the input method program; and obtaining the context content comprises: obtaining by the application, the context content of itself. Or, obtaining the input content comprises: obtaining, by the input method program, the input content of itself; and obtaining the context content comprises: obtaining, by the input method program, the context content transmitted by the application.

According to a second aspect of the disclosed embodiment, an apparatus for input processing is provided, the apparatus comprising: an input content obtaining module for obtaining input contents; a subject content obtaining module for obtaining context contents; a matching module for matching the input context obtained by the input content obtaining module and the context content obtained by the subject content obtaining module; and a processing module for displaying the associated contents as candidate input words in case that any content in the context contents is found to be the associated with the input contents.

Optionally, the apparatus further comprise: an adding module for adding the associated contents to a vocabulary bank of the input method program in case that any content in the context contents is found to be the associated with the input contents.

Optionally, the input content obtaining module comprises: a program connecting sub-module for establishing a connection with the input method program; and an input obtaining sub-module for obtaining contents entered into the input method program to which the program connecting sub-module connects.

Optionally, the subject content obtaining module comprises: a range selecting sub-module for determining a range of the context content as the current interface, the current interface and preset adjacent interfaces, or all interfaces; and a context content obtaining sub-module for obtaining context contents of the current interface, the current interface and preset adjacent interfaces, or all interfaces according to the range selected by the range selecting sub-module.

Optionally, the matching module comprises a representation conversing sub-module and a matching sub-module. The representation conversing sub-module is for converting contents in the context content to be represented by the input rule corresponding to the input context. The matching sub-module is for matching the converted context content with the input content after contents in the context content are converted by the representation conversing sub-module to be represented by the input rule corresponding to the input context. If any content in the context contents after converted to be represented by the input rule corresponding to the input contents is identical or similar to the input contents, determining that the content is found to be associated with the input contents.

Optionally, the matching module further comprises an image content recognizing sub-module for employing an image recognition technology to recognize texts contained in the image as a part of the context contents when the context content comprises an image content.

According to a third aspect of the disclosed embodiment, a terminal device is provided, the terminal device comprises a processor and a memory for storing processor-executable instructions; wherein the processor is configured for: obtaining input contents; obtaining context contents; matching the input context and the context content; and displaying the associated contents as candidate input words in case that any content in the context contents is found to be the associated with the input contents.

Technical solutions provided by embodiments of the present disclosure may comprise the following beneficial effects: in the present disclosure, a context content are matched with an input content of an input box after being obtained, if it is matched with contents associated with the input content, the associated contents will displayed as candidate input words, so that contents that a user wants to enter may be provided to the user in a quick manner in combination with the context. It saves input time for a user, and improves user experience.

The present disclosure may also add the associated contents to a vocabulary bank of the input method program so as to enrich the vocabulary.

In the present disclosure context contents of different ranges may be selected flexibly, for example, the range may be context contents of the current interface, context contents of the current interface and preset adjacent interfaces, or context contents of all interfaces.

In addition to the text matching, the present disclosure may do the matching process after texts contained in images of the context content are recognized.

The present disclosure can be applied to scenarios of various input methods, such as Pinyin input method, Wubi input method, or Stroke count method, etc.

It is to be understood that both the forgoing general description and the following detailed description are exemplary only, and are not restrictive of the present disclosure.

### BRIEF DESCRIPTION OF THE DRAWINGS

The accompanying drawings herein, which are incorporated in the specification and constitute a part thereof, illustrate embodiments consistent with the present disclosure, and explain the principles of the present disclosure together with the specification.
Fig. 1 is a flow diagram illustrating a method for input processing according to an exemplary embodiment.
Fig. 2 is a flow diagram illustrating another method for input processing according to an exemplary embodiment.
Fig. 3 is a flow diagram illustrating another method for input processing according to an exemplary embodiment.
Fig. 4 is a block diagram illustrating an apparatus for input processing according to an exemplary embodiment.
Fig. 5 is a block diagram illustrating another apparatus for input processing according to an exemplary embodiment.
Fig. 6 is a block diagram illustrating a terminal device according to an exemplary embodiment.
Fig. 7 is a structure block diagram illustrating a device according to an exemplary embodiment.

### DETAILED DESCRIPTION

Reference will now be made in detail to exemplary embodiments, whose examples are illustrated in the accompanying drawings. When refereeing to the accompanying drawings, the same reference number in different drawings refers to same or similar elements, unless otherwise indicated. The implementations set forth in the following exemplary embodiments do not represent all implementations consistent with the present disclosure. Instead, they are merely examples of apparatuses and methods consistent with aspects related to the disclosure as recited in the appended claims.

Terminologies used in the present disclosure are only for the purpose of describing particular embodiments, and are not intended to limit the disclosure. The singular form "an", "said" and "the" used in the disclosure and the appended claims are intended to comprise plural form, unless the context clearly indicates otherwise. It should also be understood that the terminology "and/or" used herein means comprising any or all possible combinations of one or more of the associated listed items.

It should be understood that, although the terms first, second, third, etc., may be employed in the present disclosure to describe various information, but the information should not be limited to these terms. These terms are only used to distinguish one type of information from another. For example, the first information may also be referred to as second information without departing from the scope of the present disclosure; similarly, the second information may also be referred to as first information. Depending on the context, the word "if' as used herein may be interpreted as "when ......" or "in case that ......" or "in response to determining ......"

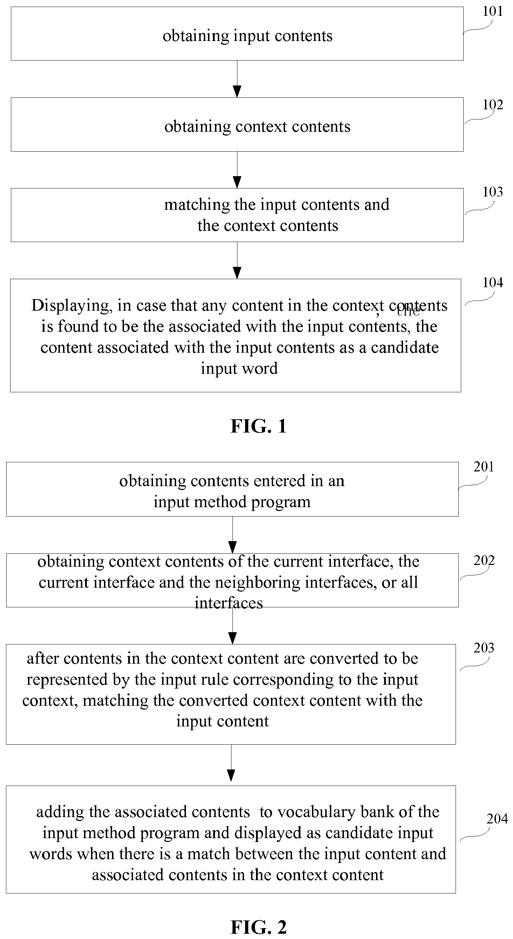

Fig. 1 is a flow diagram illustrating a method for input processing according to an exemplary embodiment, the method may be used in a terminal, and comprise the steps of:

In step 101, input contents are obtained.

In this step, contents entered in an input box by a user that is transmitted by an input method program may be obtained by an application. The way of obtaining may be obtaining by the application on its initiative, or transmitting by the input method program on its initiative. Content inputted in an input box by a user may be input contents of various input methods, such as Pinyin input method, Wubi input method, or Stroke count method, etc. That is, the present disclosure can be applied to scenarios of various input methods.

In step 102, context contents are obtained.

In this step, an application may obtain a context content from the interface thereof, the context content may be obtained from the current interface, and may also be obtained from the current interface and the neighboring interfaces, or may be obtained from all interfaces, to which the present disclosure makes no limitation, the range to be obtained may be selected according to various needs. That is, in the present disclosure context contents of different ranges may be selected flexibly according to various needs.

In step 103, the input context and the context content are matched.

In this step, after contents in the context content are converted to be represented by the input rule corresponding to the input context, match the converted context content with the input content. For example, after contents in the context content are converted to be represented by Pinyin input, match the converted input context with the input Pinyin. Or in case that the input content is of Wubi input method or Stroke count method, after contents in the context content are converted to be represented by corresponding Wubi input method or Stroke count method, match the converted input context with the input content. That is, the present disclosure can be applied to scenarios of various input methods.

In step 104, the associated contents are displayed as candidate input words in case that any content in the context contents is found to be the associated with the input contents.

In this step, if any contents in the context contents after converted to be represented by the input rule corresponding to the input context are identical or similar to the input contents, determining that the content is found to be associated with the input contents; and displaying the associated contents as candidate input words.

It should be noted that the above steps 101 and 102 are not necessarily in sequential; the context content may be obtained firstly, and then the input content may be obtained.

It should be noted that in step 104, the associated content may also be added to a vocabulary bank of the input method program.

It should be noted that after the connection is established between the application and the input method program, the above steps may be processed by either the application or the input method program. That has the following meanings.

The above steps may be: obtaining, by the application, input content of input method program and the context content of the application itself; matching, by the application, the input context and the context content; and displaying, by the application, associated contents as candidate input words in case that any content in the context contents is found to be the associated with the input contents.

The above steps may also be: obtaining, by the input method program, input content thereof and the context content of the application; matching, by the input method program, the input context and the context content; and displaying, by the input method program, associated contents as candidate input words in case that any content in the context contents is found to be the associated with the input contents.

As can be seen from the embodiment that in the present disclosure, a context content are matched with an input content of an input box after being obtained, if it is matched with contents associated with the input content, the associated contents will displayed as candidate input words, so that contents that a user wants to enter may be provided to the user in a quick manner in combination with the context. It saves input time for a user, and improves user experience.

Fig. 2 is a flow diagram illustrating another method for input processing according to an exemplary embodiment.

This method may be used in a terminal, and comprise the steps of:
In step 201, contents entered in an input method program is obtained.

In this step, the input method program may be Pinyin input method, Wubi input method, or Stroke count method, etc..

In this step, contents entered in an input box by a user through different input method (the content is transmitted by an input method program) may be obtained by an application. The way of obtaining may be obtaining by the application on its initiative, or transmitting by the input method program on its initiative.

In step 202, context contents of the current interface, the current interface and the neighboring interfaces, or all interfaces are obtained.

In this step the range to be obtained may be selected according to various needs,; that is, an application may obtain a context content from the interface thereof, the context content may be obtained from the current interface, and may also be obtained from the current interface and the neighboring interfaces, or may be obtained from all interfaces, to which the present disclosure makes no limitation.

In step 203, after contents in the context content are converted to be represented by the input rule corresponding to the input context, the converted context content is matched with the input content.

In this step, for example, after contents in the context content are converted to be represented by Pinyin input, match the converted input context with the input Pinyin. Or in case that the input content is of Wubi input method or Stroke count method, after contents in the context content are converted to be represented by corresponding Wubi input method or Stroke count method, match the converted input context with the input content. That is, when the input rule corresponding to the input contents is Pinyin input rule, matching the input contents with contents in the context contents, after the contents in the context contents have been converted to be represented by Pinyin input; when the input rule corresponding to the input contents is Wubi input rule, matching the input contents with contents in the context contents, after the contents in the context contents have been converted to be represented by Wubi input.; or when the input rule corresponding to the input contents is Stroke count input rule, matching the input contents with contents in the context contents, after the contents in the context contents have been converted to be represented by Stroke count input.

It should be noted that, when the context content comprises an image content; an image recognition technology may be employed to recognize texts contained in the image as a part of the context contents.

In step 204, the associated contents are added to a vocabulary bank of the input method program and displayed as candidate input words in case that any content in the context contents is found to be the associated with the input contents.

If contents in the context content after converted to be represented by the input rule corresponding to the input context are identical or similar to the input content, determining associated contents in the context content that match with the input content; adding the associated contents to a vocabulary bank of the input method program and displaying the associated contents as candidate input words. It should be noted that in step 204, the associated contents may displayed as candidate input words directly in case that any content in the context contents is found to be the associated with the input contents.

It should be noted that the above steps 201 and 202 are not necessarily in sequential; the context content may be obtained first, and then the input content is obtained.

Similar to the embodiment of Fig. 1, after the connection is established between the application and the input method program, the steps above may be processed by either the application or the input method program.

As can be seen from the embodiment that in the present disclosure, context contents of different ranges and input content of different input method may be obtained, after the context contents are converted to be represented by the form of the input content, the converted context contents may be matched with the input content. If the match hits identical or similarity, then add the matched contents to a vocabulary bank of the input method program and displaying the matched contents as candidate input words; so that contents that a user wants to enter may be provided to the user in a quick manner in combination with the context. It saves input time for a user, and improves user experience.

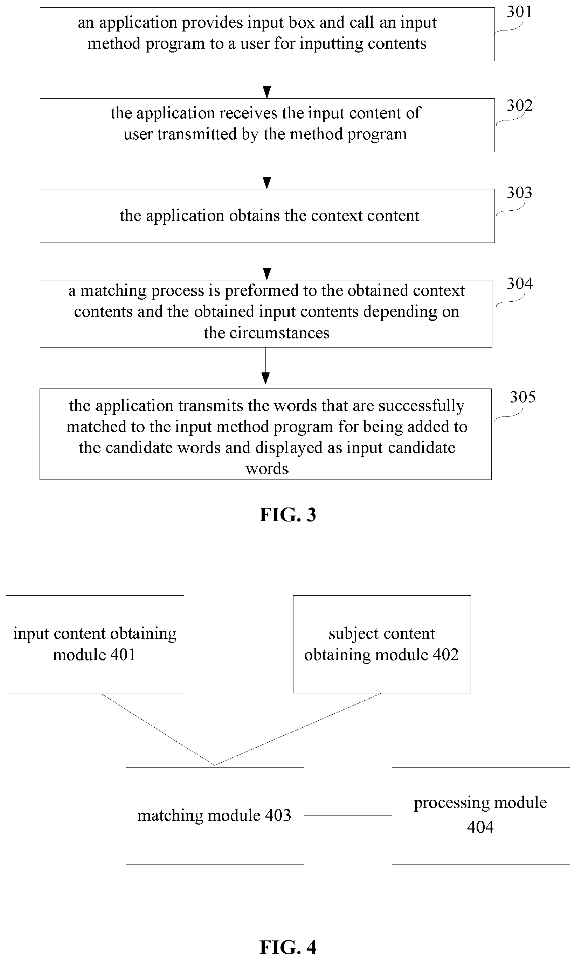

Fig. 3 is a flow diagram illustrating another method for input processing according to an exemplary embodiment.

In embodiments of the present disclosure, the connection between an input method program and the current application is established through a system interface, based on the Pinyin that a user entered, the application searches the current interface for a word that corresponds to such Pinyin and adds the word to candidate words of the input method program.

The method of Fig. 3 may be used in a terminal, and comprise the steps of:
In step 301, an application provides input box and call an input method program to a user for inputting contents.

When using an application, if a user may click an input box of the application if he or she wants to input contents. An application system detects that the input box is clicked at that time, and calls an input method program for the user to select an input method for inputting contents. When the user is writing a certain Pinyin using Pinyin input method, the input method program will match corresponding candidate words from the vocabulary bank for the user to select. The input method program may control the order of the candidate words.

It should be noted that the connection between an input method program and the application may be established through a system interface. The application may receive contents (e.g., Pinyin) transmitted by the input method program through the system interface, search words that matches the Pinyin, and send the matched words to the input method program through the system interface.

In step 302, the application receives the input content of user transmitted by the method program.

After a user spells a Pinyin in the input method program, the input method program transmits the Pinyin to the application where the input box locates through the system interface, the application receives the input of Pinyin. For example, a user input a Pinyin "hange", the input method program transmits "hange" to the application.

It should be noted that the step takes Pinyin inputs as an example for illustration, but is not limited to Pinyin inputs; Wubi or Stroke count input and etc. may also be employed.

In step 303, the application obtains the context content.

Upon receiving the inputted pinyin, the application uses the system interface to the context content displayed in the current interface, including text content and image content.

It should be noted that only the context content displayed in the current interface may be obtain, since the Pinyin inputted by the user is probably contents of the text displayed in the current interface. In addition, in order to search more contents, context contents of the current interface and adjacent interfaces may also be obtained, such as obtaining context contents of the current interface and the two adjacent interfaces next to the current interface; optionally, context contents of all interfaces may be obtained. It should be noted that, if more contents are to be searched, the time it takes for searching will be extended. It may lead display of the candidate words to be slight delayed; therefore, the range of the context content is acquired to be set as needed.

In step 304, a matching process is preformed to the obtained context content and the obtained input content depending on the circumstances.

In this step, when the context content comprises an image content; an corresponding existing image recognition technology may be employed to recognize texts contained in the image, and to convert such text to be represented by Pinyin or other input method for matching with the input content.

For a text content, whether it is recognized from the image content or the original content is a text content itself, it is converted to be represented by the input rule to which the input content corresponds. For example, if the input content is Pinyin according to Pinyin input rule, the convert the text content into corresponding Pinyin for comparison with the input content transmitted by the input method program. If the Pinyin is identical or similar to the converted text content, the match is considered to be successful and the Pinyin may be saved to a "matched words list". As another example, if the input content is in form of Wubi input, then the text content is compared with the Wubi input content transmitted by the input method program after being converted into the form of Wubi input. If the form is identical or similar to the converted text content, the match is considered to be successful and corresponding text may be saved to the "matched words list". Similarly, if the input content is in form of Stroke count, similar process may be carried out.

It should be noted that, if matching is made to the Pinyin inputted by the input method, there may be matches to several words in contents of the current interface. For example, if the Pinyin input is "hange", corresponding words may be "brother Han" or "welding" and etc., because "brother Han" and "welding" have the same Pinyin representation of "hange" in Pinyin input method, and therefore both are considered to be successfully matched and are saved to the "matched words list", the follow-up are required to join to "candidate words list" for the users to choose.

In step 305, the application transmits the words that are successfully found to the input method program for being added to the candidate words and displayed as input candidate words.

In this step, the application sends the "matched words list" that has been successfully matched and saved to the input method program after it completes the match of the context content and the input content. Upon receiving the "matched words list", the input method program may add all words in the "matched words list" to the "candidate words list" and may prioritize them on top of the "candidate words list" to be displayed to the user as input candidate words. In this way the words that are successfully matched are able to be prioritized for the user to view, input time is saved for the user, and the user experience is improved.

It should be noted that the input method program can control the order of candidate words, generally words that matches with the contexts are prioritized on top, but the present disclosure is not limited to such definition.

It should also be noted that the embodiment of Fig. 3 takes the following case as an example for illustration: the application obtains the input content transmitted by the input method program and obtains the context content of the interface of itself for following matching process. In the present disclosure, after establishing a connection to the application, the input method program may obtain the context content transmitted by the application for matching with the input content of the input method program itself. The context content transmitted by the application to the input method program may be that: the context content may be transmitted to the input method program after being converted by the application into the representation of the input method; or the context content may be transmitted to the input method program without any conversion and may be matched after being converted by the input program method. In this way, there is no need for the application to transmit the contents that are successfully found to the input method program; instead, the contents that are successfully matched will be added to top of the candidate words upon being successfully matched by the input method program directly.

As can be seen from the embodiment that in the present disclosure, the connection between an input method program and the application may be established through a system interface. The application may obtain the content entered to an input box by a user from the input method program, and may obtain the context content from one or more interfaces of the application. After the context contents are converted to be represented by the form of the input content, the converted context contents may be matched with the input content. If the match hits identical or similarity, then the match is considered as successful and the matched contents will be saved to the matched words list and sent to the input method program, the input method program adds the matched contents to a vocabulary bank of the input method program and displays the as candidate input words. In this way, contents that a user wants to enter may be provided to the user in a quick and smart manner in combination with the context. It saves input time for a user, and improves user experience. Furthermore, the present disclosure may support scenarios of different input methods, and may also make flexible settings to choose context contents, improving the speed of response.

Corresponding to embodiments implemented by the aforementioned application features, the present disclosure also provides embodiments of an input processing apparatus and a corresponding terminal.

Fig. 4 is a block diagram illustrating an apparatus for input processing according to an exemplary embodiment.

As shown in Fig. 4, the input processing apparatus comprises: an input content obtaining module 401, a subject content obtaining module 402, a matching module 403, and a processing module 404.

The input content obtaining module 401 is for obtaining input contents.

The subject content obtaining module 402 is for obtaining context contents.

The matching module 403 is for matching the input context obtained by the input content obtaining module 401 and the context content obtained by the subject content obtaining module 402.

The processing module 404 is for displaying the associated contents as candidate input words in case that any content in the context contents is found to be the associated with the input contents.

As can be seen from the embodiment that in the present disclosure, a context content are matched with an input content of an input box after being obtained, if it is matched with contents associated with the input content, the associated contents will displayed as candidate input words, so that contents that a user wants to enter may be provided to the user in a quick manner in combination with the context. It saves input time for a user, and improves user experience.

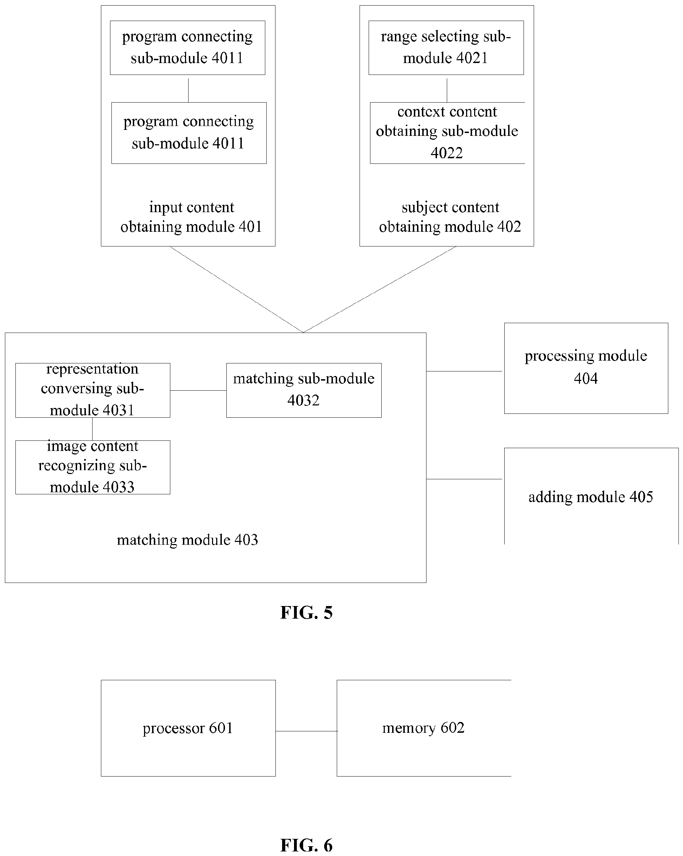

Fig. 5 is a block diagram illustrating another apparatus for input processing according to an exemplary embodiment.

As shown in Fig. 5, the input processing apparatus comprises: an input content obtaining module 401, a subject content obtaining module 402, a matching module 403, a processing module 404, and an adding module 405.

Descriptions to functions of the input processing apparatus comprises: an input content obtaining module 401, a subject content obtaining module 402, a matching module 403, and a processing module 404 may refer to the description on Fig. 4.

The adding module 405 is for adding the associated contents to a vocabulary bank of the input method program in case that any content in the context contents is found to be the associated with the input contents.

The input content obtaining module 401 comprises a program connecting sub-module 4011, and an input obtaining sub-module 4012.

The program connecting sub-module 4011 is for establishing a connection with the input method program.

The input obtaining sub-module 4012 is for obtaining contents entered into the input method program to which the program connecting sub-module 4011 connects.

The subject content obtaining module 402 comprises: a range selecting sub-module 4021, and a context content obtaining sub-module 4022.

The range selecting sub-module 4021 is for determining a range of the context content as the current interface, the current interface and preset adjacent interfaces, or all interfaces.

The context content obtaining sub-module 4022 is for obtaining context contents of the current interface, the current interface and preset adjacent interfaces, or all interfaces according to the range selected by the range selecting sub-module 4021.

The matching module 403 may comprise: a representation conversing sub-module 4031, and a matching sub-module 4032.

The representation conversing sub-module 4031 is for converting contents in the context content to be represented by the input rule corresponding to the input context.

The matching sub-module 4032 is for matching the converted context content with the input content after contents in the context content are converted by the representation conversing sub-module 4031 to be represented by the input rule corresponding to the input context. If the contents in the context content that are converted by the representation conversing sub-module 4031 to be represented by the input rule corresponding to the input context are identical or similar to the input content, determining associated contents in the context content that match with the input content.

The matching module 403 may also comprise an image content recognizing sub-module 4033.

The image content recognizing sub-module 4033 is for employing an image recognition technology to recognize texts contained in the image as a part of the context contents when the context content comprises an image content. The representation conversing sub-module 4031 converts contents in the context content recognized by the image content recognizing sub-module 4033 to be represented by the input rule corresponding to the input context.

Wherein, when the input rule to which the input content corresponds is Pinyin input rule, the matching sub-module 4032 matches the converted input context with the input Pinyin after contents in the context content are converted by the representation conversing sub-module 4031 to be represented by Pinyin input.

When the input rule to which the input content corresponds is Wubi input rule, the matching sub-module 4032 matches the converted input context with the input Wubi after contents in the context content are converted by the representation conversing sub-module 4031 to be represented by Wubi input.

When the input rule to which the input content corresponds is Stroke count input rule, the matching sub-module 4032 matches the converted input context with the input Stroke count after contents in the context content are converted by the representation conversing sub-module 4031 to be represented by Stroke count input.

When the input rule to which the input content corresponds is roman character input, the matching submodule 4032 matches the converted input context with the input roman character input after contents in the context content are converted by the representation converting submodule 4031 to be represented by roman character input.

As can be seen from the embodiment that in the present disclosure, context contents of different ranges and input content of different input method may be obtained, after the context contents are converted to be represented by the form of the input content, the converted context contents may be matched with the input content. If the match hits identical or similarity, then add the matched contents to a vocabulary bank of the input method program and displaying the matched contents as candidate input words; so that contents that a user wants to enter may be provided to the user in a quick manner in combination with the context. It saves input time for a user, and improves user experience.

Implementations of features and functions of respective unit of the abovementioned apparatus may refer to implementation of corresponding steps in the abovementioned method, it is unnecessary to go into details here.

With respect to the apparatus embodiment, since it substantially corresponds to the method embodiment, the relevant part may refer to some description on the method embodiment. The above-described apparatus embodiment is merely illustrative, wherein units described as separate components may be or may not be physically separated, components shown as a unit may be or may not be a physical unit. That is, they may be located in one place, or may be distributed on multiple network units. Part or all of the modules may be selected to achieve purposes of the present disclosure according to actual needs. It may be understood and practiced by a person skilled in the art without any creative labor being paid.

Accordingly, the present disclosure also provides a terminal.

Fig. 6 is a block diagram illustrating a terminal device according to an exemplary embodiment.

As shown in Fig. 6, the terminal device comprises: a processor 601 and a memory 602 for storing processor-executable instructions;

Wherein the processor 601 is configured for: obtaining input contents; obtaining context contents; matching the input context and the context content; and displaying the associated contents as candidate input words in case that any content in the context contents is found to be the associated with the input contents.

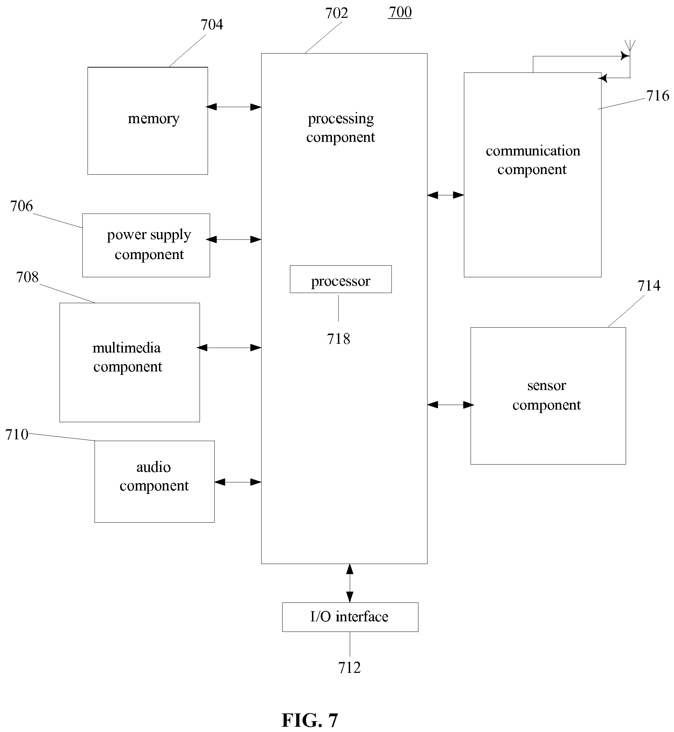

Fig. 7 is a structure block diagram illustrating a device according to an exemplary embodiment.

For example, an apparatus 700 may be a mobile phone, a computer, a digital broadcast terminal, a messaging device, a gaming console, a tablet, a medical device, exercise equipment, a personal digital assistant, and the like.

Referring to Fig. 7, the apparatus 700 may comprise one or more of the following components: a processing component 702, a memory 704, a power supply component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may comprise one or more processors 718 to execute instructions to perform all or part of the steps in the above described methods. Moreover, the processing component 702 may comprise one or more modules which facilitate the interaction between the processing component 702 and other components. For instance, the processing component 702 may comprise a multimedia module to facilitate the interaction between the multimedia component 708 and the processing component 702.

The memory 704 is configured to store various types of data to support the operation of the apparatus 700. Examples of such data comprise instructions for any applications or methods operated on the apparatus 700, contact data, phonebook data, messages, images, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 706 provides power to various components of the apparatus 700. The power component 706 may comprise a power management system, one or more power sources, and any other components associated with the generation, management, and distribution of power for the apparatus 700.

The multimedia component 708 comprises a screen providing an output interface between the apparatus 700 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 comprises a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or capable of optical focusing and zooming.

The audio component 710 is configured to output and/or input audio signals. For example, the audio component 710 comprises a microphone (MIC) configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further comprises a speaker to output audio signals.

The I/O interface 712 provides an interface between the processing component 702 and peripheral interface modules, the peripheral interface modules being, for example, a keyboard, a click wheel, buttons, and the like. The buttons may comprise, but are not limited to: a home button, a volume button, a starting button, and a locking button.

The sensor component 714 comprises one or more sensors to provide status assessments of various aspects of the apparatus 700. For instance, the sensor component 714 may detect an open/closed status of the apparatus 700, relative positioning of components (e.g., the display and the keypad of the apparatus 700), a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may comprise a proximity sensor configured to detect the presence of a nearby object without any physical contact. The sensor component 714 may also comprise a light sensor, such as a CMOS or CCD image sensor, for use in imaging applications. In some embodiments, the sensor component 714 may also comprise an accelerometer sensor, a gyroscope sensor, a magnetic sensor, a pressure sensor, or a temperature sensor.

The communication component 716 is configured to facilitate communication, wired or wirelessly, between the apparatus 700 and other devices. The apparatus 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as comprised in the memory 704, executable by the processor 718 in the apparatus 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, instructions in the storage medium, when being executed by a processor of a terminal, enable the terminal to perform an input processing method, the method comprising: obtaining input contents; obtaining context contents; matching the input context and the context content; and displaying the associated contents as candidate input words in case that any content in the context contents is found to be the associated with the input contents.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the disclosure to be limited by the appended claims only.

## Claims

1. A method for input processing, **characterized in that** the method comprises:
obtaining (101) input contents;
obtaining (102) context contents;
matching (103) the input contents with the context contents; and
displaying (104), in case that any content in the context contents is found to be associated with the input contents, the content associated with the input contents as a candidate input word.

2. The method of claim 1, **characterized in that** the method comprises:
adding the associated content to a vocabulary bank of an input method program.

3. The method of claim 1, **characterized in that** the obtaining the input contents comprises: obtaining contents entered by an input method program.

4. The method of claim 1, **characterized in that** the obtaining the context contents comprises: obtaining context contents of a current interface, the current interface and the preset neighboring interfaces, or all interfaces.

5. The method of claim 1, **characterized in that** the matching the input contents to the context contents comprises:
matching the input contents with contents in the context contents, after the contents in the context contents have been converted to be represented by an input rule corresponding to the input contents;
if any content in the context contents after converted to be represented by the input rule corresponding to the input contents is identical or similar to the input contents, determining that the content is found to be associated with the input contents.

6. The method of claim 5, **characterized in that** when the context contents comprise one or more images, recognizing texts included in the image as a part of the context contents by an image recognition technology, before the matching the input contents with the context contents.

7. The method of claims 5 or 6, **characterized in that** the matching the input contents with the converted context contents comprises:
when the input rule corresponding to the input contents is Pinyin input rule, matching the input contents with contents in the context contents, after the contents in the context contents have been converted to be represented by Pinyin input;
when the input rule corresponding to the input contents is Wubi input rule, matching the input contents with contents in the context contents, after the contents in the context contents have been converted to be represented by Wubi input.; or
when the input rule corresponding to the input contents is Stroke count input rule, matching the input contents with contents in the context contents, after the contents in the context contents have been converted to be represented by Stroke count input.

8. The method of claim 1, **characterized in that** the obtaining the input contents comprises: obtaining, by an application, input contents transmitted by an input method program; and, the obtaining the context contents comprises: obtaining, by the application, the context contents of itself; or
the obtaining the input contents comprises: obtaining, by an input method program, input contents of itself; and, the obtaining the context contents comprises: obtaining, by the input method program, context contents transmitted by an application.

9. An apparatus for input processing, **characterized in that** the apparatus comprises:
an input content obtaining module (401), configured to obtain input contents;
a subject content obtaining module (402), configured to obtain context contents;
a matching module (403), configured to match the input context obtained by the input contents obtaining module with the context contents obtained by the subject content obtaining module; and
a processing module (404), configured to display in case that any content in the context contents is found to be associated with the input contents, the content associated with the input contents as a candidate input word.

10. The apparatus of claim 9, **characterized in that** the apparatus comprises:
an adding module (405), configured to add the associated contents to a vocabulary bank of an input method program in case that any content in the context contents is found to be the associated with the input contents.

11. The apparatus of claim 9, **characterized in that** the input content obtaining module (401) comprises:
a program connecting sub-module (4011), configured to establish a connection with the input method program; and
an input contents obtaining sub-module (4012), configured to obtain contents entered into the input method program to which the program connecting sub-module connects.

12. The apparatus of claim 9, **characterized in that** the subject content obtaining module (402) comprises:
a range selecting sub-module (4021), configured to determine a range of the context contents as a current interface, the current interface and adjacent setting interfaces, or all interfaces; and
a context contents obtaining sub-module (4022), configured to obtain, according to the range selected by the range selecting sub-module, context contents of the current interface, the current interface and adjacent setting interfaces, or all interfaces.

13. The apparatus of claim 9, **characterized in that** the matching module (403) comprises:
a representation conversing sub-module (4031), configured to convert contents in the context contents to be represented by an input rule corresponding to the input contexts; and
a matching sub-module (4032), configured to match the input contents with contents in the context contents, after the contents in the context contents have been converted to be represented by the input rule corresponding to the input contents; and to determine, in case that any content in the context contents after converted to be represented by the input rule corresponding to the input contents is identical or similar to the input contents, the content is found to be associated with the input contents.

14. The apparatus of claim 13, **characterized in that** the matching module (403) further comprises:
an image content recognizing sub-module (4033), configured to employ an image recognition technology to recognize texts included in the image as a part of the context contents, when the context contents comprise an image content.

15. A terminal device, comprising:
a processor; and
a memory for storing processor-executable instructions;
wherein the processor is configured for:
obtaining input contents;
obtaining context contents;
matching the input contents with the context contents; and
displaying, in case that any content in the context contents is found to be associated with the input contents, the content associated with the input contents as a candidate input word.
